# EUROPEAN PATENT APPLICATION

(11) **EP 4 664 451 A1**
(43) Date of publication of application: **17.12.2025**
(21) Application number: 25180821.8
(22) Date of filing: 04.06.2025
(51) Int. Cl.: G10L 15/22

(54) **INPUT SYSTEM AND METHOD**

(30) Priority: 14.06.2024 GB 202408559
(71) Applicant: Sony Interactive Entertainment Inc., Tokyo 108-0075 (JP)
(72) Inventor: LEUNG, Jun Yen, London, W1F 7LP (GB); CERRATO, Maurizio, London, W1F 7LP (GB)
(74) Representative: D Young & Co LLP

(57) **Abstract**

An input system comprises a spoken input processor configured to receive spoken inputs from a microphone operably coupled to the input system; a physical input processor configured to receive physical inputs from a peripheral device operably coupled to the input system, the physical inputs having a timing relative to the spoken inputs; and a speech recognition processor configured to recognise speech from the speech inputs; wherein the speech recognition processor uses at least some of the received physical inputs, and their timing relative to the spoken inputs, as part of the speech recognition process.

## Description

### BACKGROUND OF THE INVENTION

### Field of the invention

The present invention relates to an input system and method.

### Description of the Prior Art

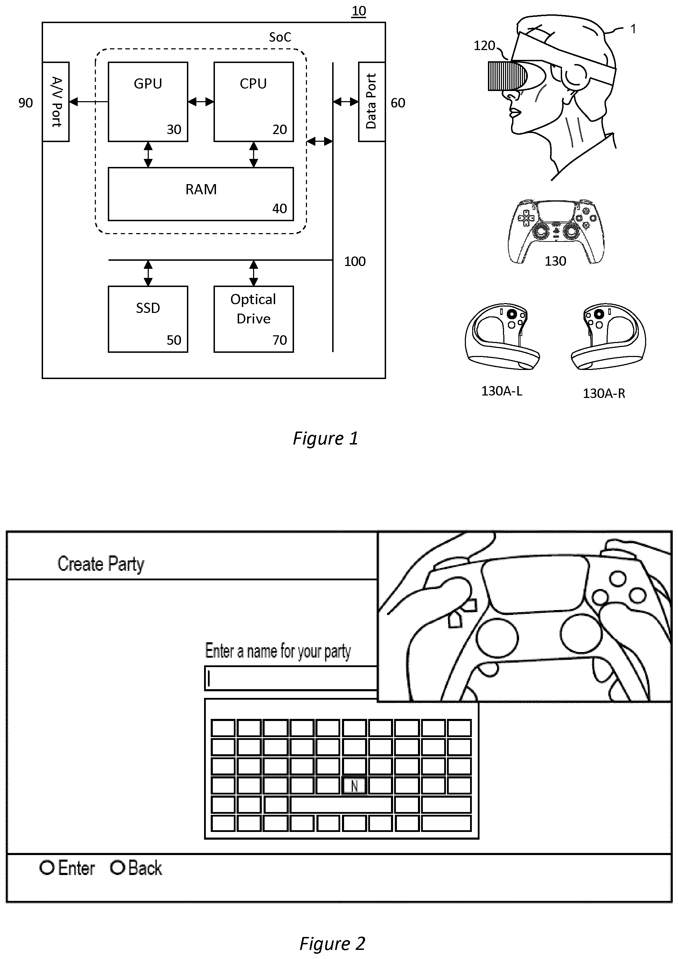

Most entertainment systems (e.g. videogame consoles and the like) allow users to communicate with the system (and through it, potentially with other users) for example by use of a hand-held controller to select one or a set of pre-set messages (for example within the limited context of a multiplayer videogame), or as shown in Figure 2, by using the controller to navigate a virtual keyboard to select arbitrary text (for example to input a password, or send a message to another player). However, these techniques can be limited in their expression, or relatively slow, for a user.

Consequently, another mechanism for producing desired text is by speech-to-text recognition. A user may have a microphone, for example on a headset or incorporated into their handheld controller, and their speech can be recognised and turned into text. This can be very efficient compared to using a controller and a virtual keyboard, particularly for multiplayer environments that emphasise social interactions and hence may expect a lot of typed words. It will also be appreciated that this is not limited to the context of games and games consoles, but may also be relevant to any use of speech-to-text recognition, for example to dictate diary entries, speak search queries, and the like.

However, people with strong accents, raspy or atonal voices, or speech that, for the purposes of speech recognition techniques may be considered atypical (such as those with a lisp or a nasal voice, or who have non-native language intonation or cadence) may have significant difficulty with speech-to-text recognition. Similarly, background noise (particularly background noise that includes fragmentary speech such as in a restaurant, train station or other crowded place) can make speech-to-text recognition less accurate. Other factors that can adversely affect recognition include microphone quality and/or positioning, and the use of uncommon words.

As a result for some people, or in some circumstances, this otherwise very efficient means of generating text is not sufficiently reliable to be usable.

Embodiments of the present invention seek to address or mitigate this need.

### SUMMARY OF THE INVENTION

Various aspects and features of the present invention are defined in the appended claims and within the text of the accompanying description.

In a first aspect, an input system is provided in accordance with claim 1.

In another aspect, an input method is provided in accordance with claim 12.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 is a schematic diagram of an input system in accordance with embodiments of the present description.
- Figure 2 is an illustration of a virtual keyboard known in the art.
- Figures 3A and 3B are illustrations of physical mini keyboards known in the art.
- Figures 4A and 4B are schematic views of a handheld controller in accordance with embodiments of the present description.
- Figure 5 is a table of phonemes in accordance with embodiments of the present description.
- Figures 6A-D are schematic diagrams of input maps in accordance with embodiments of the present description.
- Figures 7A and 7B are schematic diagrams of a user interface in accordance with embodiments of the present description.
- Figure 8 is a flow diagram of a method of identifying an input in accordance with embodiments of the present description.

### DESCRIPTION OF THE EMBODIMENTS

An input system and method are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

Referring now to the drawings, wherein like reference numerals designate identical or corresponding parts throughout the several views, Figure 1 shows an example of an input system, in the form of an entertainment system 10 such as a computer or console, operating in conjunction with one or more handheld controllers 130, and/or one or more VR controllers (130A-L,R) in the case of an head mounted display 'HMD'.

The entertainment system 10 comprises a central processor or CPU 20. The entertainment system also comprises a graphical processing unit or GPU 30, and RAM 40. Two or more of the CPU, GPU, and RAM may be integrated as a system on a chip (SoC). Further storage may be provided by a disk 50.

The entertainment device may transmit or receive data via one or more data ports 60. It may also optionally receive data via an optical drive 70.Audio/visual outputs from the entertainment device are typically provided through one or more A/V ports 90 or one or more of the data ports 60. Where components are not integrated, they may be connected as appropriate either by a dedicated data link or via a bus 100.

An example of a device for displaying images output by the entertainment system is a head mounted display 'HMD' 120, worn by a user 1. Other examples include a television or monitor.

### Typed Inputs

Unlike traditional computers, which have a keyboard as a primary input, most entertainment systems rely on a handheld controller (or occasionally two) as the primary input to the device. For most applications, such as menu navigation and selection, and playing games, this is ideal and allows for a conveniently handheld form factor for the user.

However, on occasion it is necessary to input text - for example when logging into an account. However, in the absence of a physical keyboard, the handheld controller is typically limited to navigating a virtual keyboard, which in effect replicates existing menu navigation to select letters and numbers as seen in Figure 2. This is an inefficient and cumbersome solution, that may be tolerable for occasional short inputs, but is less fit for social interactions within multiplayer environments, for example in order to hold virtual conversations.

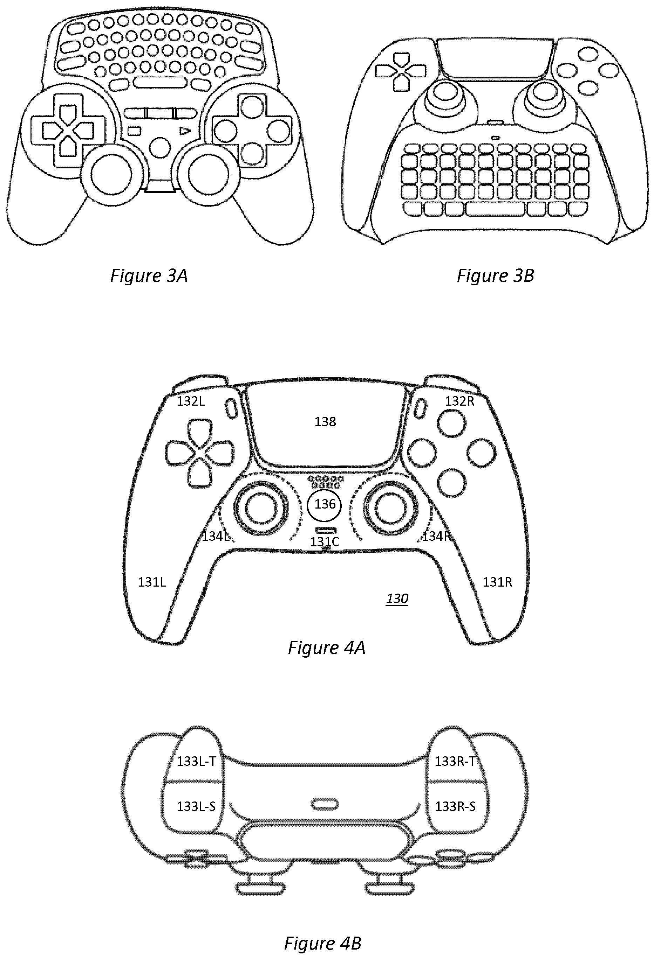

To accommodate this, miniature keyboards have been provided to clip on to handheld controllers. Typically these mini keyboards draw power from the host controller, for example via its USB port. However, in addition to being very small, these keyboards are also ergonomically limited by the existing physical input and structural requirements of the host controller. Hence for example a keyboard may be attached so as to sit above the controller, as in Figure 3A, enabling thumb-based typing. However, if the controller has a touch surface on the upper half of its body, this may not be a viable solution and so the keyboard may have to fit below the main controller body between the handles, as per Figure 3B.

In addition, this represents an additional element of hardware needed to overcome a user interface issue, and also represents an additional drain on the controller battery when the keyboard is not in use, as well as an impact on the balance and ergonomics of the controller itself.

Accordingly, there is a need for an improved input system and method.

Referring now to Figures 4A and 4B, interaction with the system is typically provided using the handheld controller 130. Such a controller typically has two handle sections 131L,R and a central body 131C. Various controls are distributed over the controller, typically in local groups. Examples include a left button group 132L, which may comprise directional controls, and similarly right button group 132R, which comprise function controls. The controller also includes left and/or right joysticks 134L,R, which may optionally also be operable as buttons by pressing down on them. The controller may also comprise top buttons 133L,R, including shoulder buttons 133L-S,R-S and trigger buttons 133L-T,R-T.

The controller (typically in the central portion of the device) may also comprise one or more system buttons 136, which typically cause interaction with an operating system of the entertainment device rather than with a game or other application currently running on it; such buttons may summon a system menu, or allow for recording or sharing of displayed content. Furthermore, the controller may comprise one or more other elements such as a touchpad 138, a light for optical tracking (not shown), a screen (not shown), haptic feedback elements (not shown), and the like. It will be appreciated that whilst the controller of Figures 4A,B is used herein as an example, other controllers such as VR controllers 130AL,R may be similarly considered.

As noted elsewhere herein, traditionally a controller is used to navigate a virtual keyboard when inputting text or alphanumeric data.

In principle, some controllers (including those shown in Figures 4A and 4B) have sufficient inputs to indicate 26 characters (e.g. for the English alphabet); for example each joystick may be used to indicate 8 letters using cardinal and ordinal directions (for a total of 16), the button groups 132L,R can indicate a further 8, and the shoulder buttons the final 2. The right and left trigger buttons could then for example indicate a space and a delete respectively.

However, this would be physically complicated to interact with, and also leaves limited inputs available to select for example between upper and lower case letters, numbers, or punctuation.

It will also be appreciated that some other languages have more characters in their alphabet, or more variations of characters (e.g. with accents), exacerbating this issue.

Accordingly, in embodiments of the present description an alternative input scheme is based on the use of phonemes, so that a user can enter words as they sound phonetically.

This allows for a generalised and common input scheme across multiple languages, as the superset of phonemes are basically the same for all spoken languages.

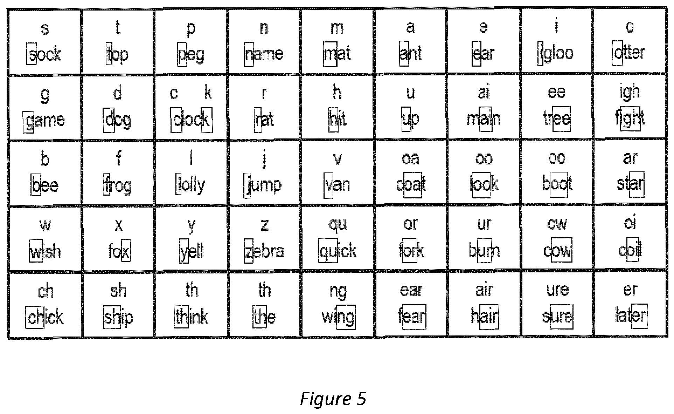

However, as noted above, for a handheld controller there are a limited number of inputs, making for example the selection of 26 letters in an alphabet difficult - meanwhile there are even more phonemes (typically English is considered to have 44 or 45 - see Figure 5), potentially making the problem worse rather than better.

### Phonetic Input Structure

Accordingly, optionally in embodiments of the present description, phoneme inputs are structured based on syllables of words, which typically have a start, middle, and end phoneme - for example the single-syllable word 'car' can be broken up as "k" + "ah" + "r". The three parts can be referred to as the onset, nucleus, and coda. Alternatively or in addition, a syllable can be structured in two parts, as either an onset and rime, or body and coda. An example of this is the word 'event', where the first syllable is in two parts: "air" + "v", whilst the second is in three: "eh" + "n" + "t".

Notably, the distribution, frequency, or probability of phonemes is different for the onset, nucleus, and coda (or onset and rime, or body and coda) of most syllables for most languages. There are also common combinations of phonemes, and common cases where phonemes are not combined.

Consequently the sets of phonemes for each stage of a syllable may be selected from different and wider possible sets of options, particularly for the onset and coda sets.

The selection of these subsets may be based for example on a statistical analysis of words in the relevant language. The analysis may be based on a dictionary-type word selection, but this does not reflect usage frequency and hence probability in use. Accordingly such an analysis may use a corpus of real-world language use.

Optionally the corpus may comprise or consist of existing typed conversations within the context of video game play (for example suitably anonymised, or optionally anonymised to within demographic groups based on age and/or gender), as these are likely to contain a more representative distribution of phonemes for the use-case. Typed text can be mapped to phonemes using heuristics or look-up tables.

The conversations may have been typed using the existing virtual keyboards, and/or may be obtained from players on other platform systems, such as those that utilise physical keyboards, as this is more likely to be representative of the language users would prefer to use if not limited by the current modes of input. Similarly transcripts of voice chat may be used. A subset of most common phonemes within the corpus for each stage of a syllable may then be determined.

The corpus may be further derived from different usage scenarios, such as different games or game genres, or different modes of use of the entertainment device.

In any event, such a selection for each stage of a syllable effectively reduces the number of phonemes that may need to be represented by controller inputs for each step of a phonetic spelling of a syllable. In other words, the user may be presented with a different subset of phonemes to select from for each part of a syllable that they input with their controller.

Presenting, for example, sixteen phonemes at a time in a UI would allow them to be uniquely indicated by just the two joysticks 134L,R, based on the cardinal and ordinal directions.

### User Interface

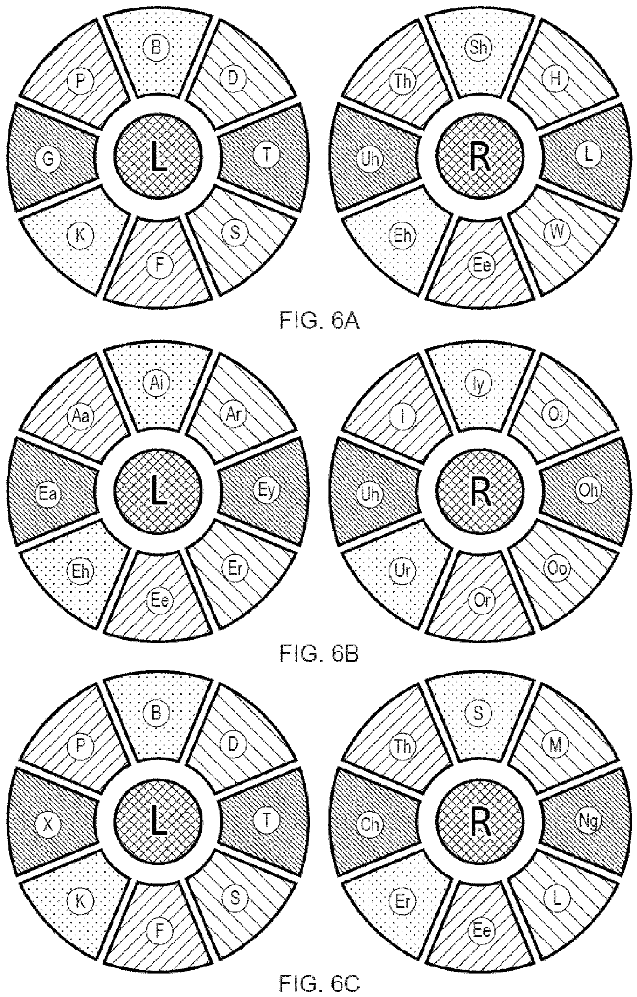

This is illustrated, as a non-limiting example, in Figures 6A-C.

Figure 6A shows a set of 16 onset phonemes. In this non-limiting example plosives and fricatives are on the left joystick, with softer phonemes on the right. Such larger groupings by phoneme type can assist the user to develop muscle memory.

Figure 6B shows a set of 16 nucleus phonemes. In this non-limiting example these are roughly ordered by vowel. Again such grouping helps with muscle memory.

Figure 6C shows a set of 16 coda phonemes. Again in non-limiting example plosives and fricatives are on the left joystick, with softer phonemes on the right. Such larger groupings by phoneme type can assist the user to develop muscle memory.

All the above cases are exemplary only and it may be appreciated that modifications may be considered, and that the phonemes are likely to differ for different languages. It will also be appreciated that a user may choose to configure their own mapping, and so rearrange the phonemes that are provided according to personal preference.

Optionally, the three sets (or more generally, a plurality depending for example on the expected syllable / word structure) could be displayed stacked in parallel in a manner such as that showed by Figures 6A-C together, with a user interface moving between them once a user has selected a phoneme (or opted to skip one, as described elsewhere herein). In this way the user can efficiently select triplets or couplets of phonemes to spell out syllables.

In each case, the letter can be indicated using the joystick, and actually selected using any appropriate mechanism, including holding the joystick in that position for a predetermined period (which may be short), moving the joystick sufficiently in a given direction, pushing down on the joystick (if it has such an input), and/or pressing another button such as a shoulder or trigger button.

It will be further appreciated that if more than 16 phonemes are selected, other buttons may be assigned to the additional phonemes, or in principle the number of one or more joystick directions could be increased, e.g. to point to 9, 10, 11, 12, etc. phoneme options (although this tends to be more difficult for users to accurately control, and 8 directions is preferred).

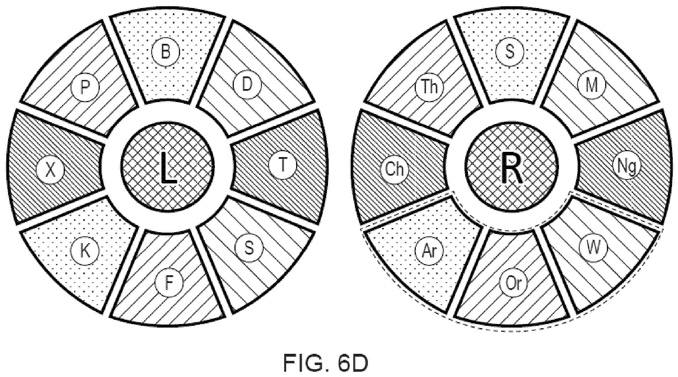

Referring now also to Figure 6D, whilst the phonemes may stay static in relation to the joysticks and/or other inputs of the controller, optionally some or all of them can be updated dynamically.

Hence for example one section of the joystick inputs could be given over to dynamic suggestions of phonemes that are more likely at the current position in a word than those already available elsewhere in the joystick selection; these would replace the existing phonemes within a specific region (denoted in Figure 6D by dotted lines), for example those currently least likely but originally included.

Alternatively or in addition, one or more buttons in one of the other input groups (e.g. 132L,R) could be dynamically allocated to letters, so that the muscle memory for static mappings on the joysticks can remain wholly consistent, although this means the user must disengage from at least one of the joysticks to select a button

In any event, such an approach may also be used based on statistics between phonemes (i.e. predicting most likely next phoneme and including them if not currently available); this prediction may be based on one or more selected from the list consisting of: phoneme pairing probability, phoneme sequence probability within a syllable, phoneme probability (or sequence probability) given a preceding syllable, and phoneme probability (or sequence probability) given a preceding word.

It will be appreciated that a mix of static phoneme and contextual phoneme suggestions advantageously allows for familiarity and muscle memory to develop whilst also increasing the number of available phonemes to select from.

In embodiments of the present description, it is further appreciated that particularly for the onset and coda phonemes, it can be difficult to allocate all the possible phonemes to the intended inputs of the controller, even if using dynamic allocation for some or all of them.

Accordingly, alternatively or in addition to other schemes described herein, optionally phonemes may be dropped if they are homophones, or close homophones, of a selected phoneme. Typically in this case the more common phoneme will be selected, whilst the less common one will be dropped.

Hence for example, one of 'b' and 'p' may be dropped (typically the one that is less probable / less frequent / has a lower predicted likelihood, either statically or dynamically). Similarly one of 'm' and 'n' may be dropped. In some languages, 'l' and 'r' may be considered interchangeable and so one may be dropped, and so on. This provides extra spaces for the next most likely phonemes to be included in the UI, whilst the user can spell out their words using approximate-sounding phoneme choices.

In a similar manner, alternatively or in addition a 'swap' button (e.g. one of the shoulder or trigger buttons) could be used to swap one set of phonemes with most or all of the currently missing phonemes - for example the phonemes associated with the right joystick could be swapped for the next 8 most probable / frequent phonemes. This could be a toggle, or more likely akin to a shift function, only occurring whilst the button was pressed.

A similar swap button scheme could toggle or switch between phoneme sets for syllables starting with a consonant sound, and syllables starting with a vowel sound, for example. In this case one may then end up with phonemes shown in the UI element of Figure 6B occurring in the UI element of Figure 6A, and vice-versa.

Likewise a similar swap function could be provided to indicate an intention to use upper or lower case, or to switch to numbers or symbols. For example pressing the left joystick down in the neutral/central position could summon numbers and associated symbols such as £, $, %, =, and the like, and pressing it again could revert to the phonemes. Similarly pressing the right joystick down in the neutral/central position could summon other symbols such as the @, ?, !, and other functional / grammatical symbols or accented letters.

Such swap functions could alternatively or in addition be assigned to function keys on the controller (for example keys marked with a triangle, square, circle, or cross, or marked with the letters X, Y, A, or B, or shoulder/trigger buttons).

It was noted previously herein that syllables may have three parts or two parts. Accordingly the UI may optionally also allow the user to skip input to one or more of the input rings, so as to only input two or one phoneme for a syllable. Hence for example for the word 'ever', the user may select 'Eh' from the UI element of Figure 6A, and then skip twice (or use an input to indicate a syllable is complete, such as a trigger), end then input 'F', 'Ur', and skip (or end) for the second syllable, to produce two syllables ('Eh') + ('F'+'Ur') approximating the word, where neither syllable has three phonemes. The 'skip' input could also be optionally considered as 'null' phoneme for processing, if required.

There are also some syllables that are more complex, such as the one-syllable word 'warmth', or the use of 's' in English to denote plurals, such as for 'cats'. In these cases, users can artificially break the syllable up into run-on parts, for example to produce ('W'+'Or'+'M') + ('Th' & end) for 'warmth' and ('K'+'Aa'+'T') + ('S' & end) for 'cats', with the UI sequencing through a three-part syllable structure of Figures 6A-C as normal, except where skipped/ended.

Alternatively or in addition, the user could indicate a desire to input two phonemes from one UI element, e.g. using a shoulder or trigger button, so that 'M' and 'Th', or 'T' and 'S' are both input via the UI element of Figure 6C as an extended phoneme sequence for one syllable.

It will be appreciated that the techniques herein thus beneficially assist with efficient input of text, albeit phonetically. For example the word 'cats' can be input just by pointing the left joystick in 4 directions to identify 'K'+'Aa'+'T'+'S' in successive UI elements, and similarly the word 'warmth' can be input just by pointing the right joystick in 4 directions to identify 'W'+'Or'+'M'+'Th' in successive UI elements.

Hence more generally the techniques herein may apply to words and/or syllables, since at least in some circumstances the terms are interchangeable.

### Word Selection

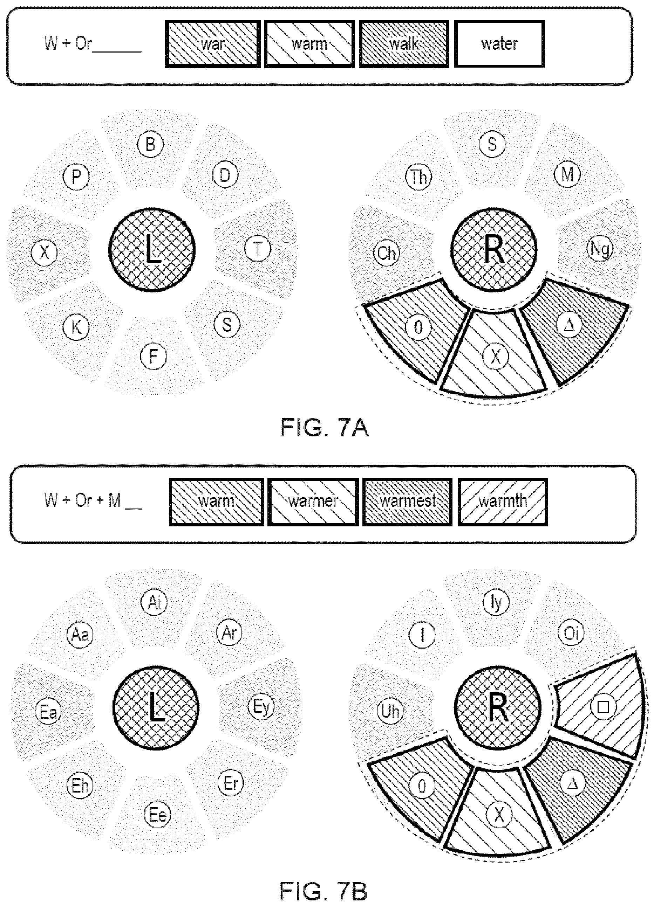

Referring now also to Figures 7A-B, it will be appreciated that a virtual UI of this kind may include syllable and/or word suggestions as the user 'types'. These suggestions may be based on any suitable technique, including based on preceding words and/or syllables in a sequence and the phoneme inputs / skips for the word and/or syllable so far.

In Figure 7A, the user has already selected the phonemes W + Or. This would represent the single syllable word 'war', or alternatively the words 'warm' or 'walk', or could be part of the multi-syllable word 'water', or possibly other words, if the user adds more inputs.

Accordingly, as shown the system can indicate how to select one of the words (or syllables that) is consistent with the phonemes input so far. The words provided for possible selection may be selected according to any suitable scheme, including one or more of frequency, and correlation with one or more preceding words, as per known word prediction schemes.

The words may each be associated with a button on the controller (for example one each of the buttons in group 132R), and/or a respective joystick direction; for example where a section of the joystick UI is for dynamic inputs, this could be used to indicate the word selection. Hence in Figure 7A, the words war, warm, and walk are colour coded (and also optionally a button icon is shown indicating a button that also selects the word). Hence moving the right joystick to the bottom left would select 'war', as would pressing the circle button on the controller. Meanwhile moving that joystick down would select 'warm', as would pressing the 'X' button. Finally, moving the joystick to the bottom-right would select 'walk', as would pressing the triangle button.

If more words or syllables were possible, these could also be shown, and occupy more candidate joystick directions. Alternatively or in addition, use of a 'swap' button as discussed previously could show the next set of candidates for selection. If there are more than a predetermined number of candidates, then alternatively or in addition they system may not show all the selectable options. In this case, the subsequent input of the user (e.g. selection of 'M' or 'K'), will act to filter the candidates down to a smaller number.

Hence for example referring to Figure 7B, the user does not select to complete one of the suggested words / syllables, but instead inputs an 'M'. This eliminates war, walk, and water as options.

'Warm' is still an option despite not being selected at the previous stage, and now the most likely additional candidates may be 'warmer', 'warmest', and 'warmth'.

In this example, optionally all four words are offered for selection in a similar manner to that shown in Figure 7A. Notably this is useful when the current UI does not normally show the relevant next phoneme (for example 'Th' in this case for 'warmth').

Alternatively or in addition, when the user selects space/end, 'Er', or 'Eh', this will disambiguate the four candidates (by indicating one of three of them), and the relevant word can either be selected (e.g. in the case of 'warm' if space or end is input) or suggested as the only candidate in the case of the other words, after which the user can either select space/end or continue to input the phonemes for the word anyway, or to spell a different word. For example, the user might enter 'Ee' and the 'Ng' for 'warming', or skip (to another UI element) and then 'Th' for 'warmth'. Hence it will be appreciated that optionally there may be multiple ways to input a word using some or all of the schemes described herein.

As noted elsewhere herein, optionally some similar homophones may be dropped as input options. Hence as a non-limiting example, in the case of Figures 7A and 7B if 'N' have been omitted as an approximate homophone to 'M', then options for both 'warm' and 'warn' may have been suggested for selection.

It will be appreciated, with reference to the figures, that phonemes may be represented by letters like 'T', or example letter pairs like 'Ee' or 'Ey'. Optionally the phonemes could be represented by the phonetic alphabet, but this is unlikely to be familiar to most users. Hence in practice the UI provides one or more characters representative of a phoneme or of two or more similar phonemes in the case where some homophones are dropped, as described elsewhere herein.

### Spoken Input

The techniques above relate to an efficient means of providing phoneme/syllable based typed (button-based) input. However, it will be appreciated that modern devices (for example mobile phones) can use voice input to dictate text. Typically these phones transmit an abstraction of the user's voice to a remote server that performs the computationally more expensive recognition, but whether performed remotely or locally the same basic techniques apply.

Typically, a hidden Markov model, convolutional neural network, or recurrent neural network (hereafter generically referred to as 'speech recogniser' comprising machine learning), is trained to determine the highest probability phoneme (or similar representation of speech) for a current time slice of the speech (e.g. 100ms). The probability is typically based on a combination of properties of the current time slice, one or more preceding time slices, one or more preceding determined phonemes, and/or one or more preceding words. If a delay is permitted, potentially one or more following time slices or properties thereof may also be used. In practice, the time slices are typically pre-processed into the frequency domain (e.g. using a fast Fourier transform) as a spectrum, and may be similarly processed again to form a so-called cepstrum, which preserves formant structure and overall energy distribution over the frequencies of the spectrum, but removes the pitch of the underlying speech, which can be an uncorrelated factor that reduces accuracy. The spectrum and/or cepstrum can be weighted (e.g. by varying bin sizes) to provide higher resolution representation in frequencies most relevant to the disambiguation of speech. Such an output may be a so-called Mel-weighted cepstrum. Regardless of the form of the input (Mel cepstrum, cepstrum, Mel-frequency, frequency, time series, or other, e.g. wavelet), the Markov model or network is trained, typically using labelled speech, to predict the most likely corresponding phoneme as described above.

In any event, such a system can also generate a phoneme sequence, which in turn can be related to words to provide an estimate of the user's speech.

The selection of the most probable words can again be based on a hidden Markov model, convolutional neural network, or recurrent neural network trained to determine the highest probability word based on a phoneme sequence, or similarly phoneme-to-word dictionaries or look-up tables, optionally with heuristics to handle commonly missed phonemes in sequences, or common miss-attributions. It will be appreciated that the techniques described elsewhere herein for manual entry of phonemes can similarly make use of phonemes recognised from speech in the above manner.

Hence where a user of an entertainment device 10 has access to a microphone (for example on a headset, HMD 120, or in their handheld controller 130, 130A), then as an alternative or additional mode of input to those described elsewhere herein, they could speak to the entertainment device to dictate their text.

However, it will be appreciated that these techniques, even though fairly robust, tend to work best for users whose voices are close to an average voice of the training set used for phoneme recognition. Meanwhile, people with strong accents, raspy or atonal voices, or speech that, for the purposes of the above spoken input techniques may be considered atypical (such as those with a lisp or a nasal voice, or who have non-native language intonation or cadence) may have significant difficulty with spoken input user interfaces. Similarly, background noise (particularly background noise that includes fragmentary speech such as in a restaurant, train station or other crowded place) can make recognition harder. Other factors that can adversely affect recognition include microphone quality and/or positioning, and the use of uncommon words.

Accordingly, in embodiments of the present description, spoken inputs are complemented with one or more physical inputs on the controller substantially simultaneously (i.e. with corresponding timing as determined by the user), to help disambiguate the speech and improve recognition.

In a first instance, the physical input may simply indicate or signal the start of each spoken word (i.e. a word boundary). Hence for example the user may tap a button on the controller, move a joystick or trigger, or tap on or move on a touch pad of the controller; the specific mode of input may be a choice of the developer of the operating system, an application using the technique, or the user, to the extent that input customisation is enabled for them.

In this case, the physical input is timed by the user to provide indications of word boundaries. This in turn helps with phoneme recognition not just at the word boundary, but potentially further into the word (and at the end of a preceding word) as phoneme probabilities vary as a function of word placement, and also, in a knock-on manner, as a function of preceding or following phonemes. As a result manual word boundary identification can improve phoneme recognition throughout the words of a sentence.

To give an example, the sentence 'I need to get some extra fries' could be resolved more accurately as 'I need to get some exercise', depending on what word boundaries are indicated manually by the user as they speak.

The speech recogniser can be trained as before, but also with additional boundary signals corresponding to those that would be received from the controller. Optionally any relative input delay from the physical input and the microphone may be factored into the training inputs as a timing offset, as may a timing distribution representative of variations in user timing of such physical inputs. Optionally the speech recogniser can be trained with and without these boundary signals, so that it is still able to operate without them. The suitable ratio of training inputs with and without such signals may be determined empirically. Optionally, some or all training may include such signals, but the signals may be randomly omitted with an empirically determined probability, since omission of occasional inputs during speech is the more likely pattern for those who use the scheme.

Optionally the speech recogniser can also be trained with boundary signals that occur incorrectly within some words (e.g. multi syllabic words). This can help when a user starts inputting according to the rhythm of the speech and inadvertently taps at an internal syllable of a word. This is most likely when a multisyllable word follows a series of single syllable words, and so a proportion of training inputs embodying this error can be included.

In this way, a speech recogniser can be trained to be robust to accidental omissions of word boundary signals, and accidental inclusions of such signal typically in characteristic circumstances, whilst still learning to use them to assist with disambiguation of speech for some users.

Optionally, entirely separate speech recognisers may be trained for use with or without the scheme, the speech recogniser trained with word boundary signals being used if the user selects to use physical inputs as well due to recognition difficulties without them. Optionally a speech recogniser trained with word boundary signals may also be trained using at least a proportion of utterances from users that fare poorly with the more conventional speech recogniser, since these users are the ones more likely to use the version of the speech recogniser that can receive word boundary signals.

It will be appreciated that whilst the above refers to providing such a physical input at the start of a new word, optionally (and for continuous speech, equivalently) a user could provide such a physical input at the end of each word, i.e. to punctuate word completion. Some users may find this easier to do. Optionally the mode of input chosen by the user (indicating start or end) may be selected by a UI, and/or inferred from the inputs associated with first and last words in an utterance.

In a second instance of the embodiments, the boundary signal is more informative than merely indicating the boundary existence.

For example, the user may use the input techniques described elsewhere herein to indicate that the first letter of the next word is a consonant or a vowel, by selecting a relevant input (whether dedicated buttons or joystick directions) typically indicated for the user on a graphical UI. The basic classification of the starting sound of the next word in this manner can generally be easily achieved by most users in real-time, or close to the rate of normal speech. Optionally any other quick and easy classification may be used (for example depending on language or input representation), for somewhere between for example 2 and 4 options; these alternatives are taken as implied by reference herein to classification (of consonants or vowels).

This additional discriminating information may again be incorporated into a training regime for a speech recogniser in any of the manners described previously. In this case the additional classification of the first sound of the next word can provide additional discrimination for the speech recogniser to improve its accuracy. Again to help with robustness, optionally the training set may include a proportion of erroneous classifications, and may include training with and without such inputs.

In a third instance of the embodiments, the word boundary signal is yet more informative, and uses one or more of the phoneme input techniques described elsewhere herein to allow the user to input the phoneme, or a homophone of the phoneme, to indicate a word boundary at the appropriate time in the speech.

Again this additional discriminating information may be incorporated into a training regime for a speech recogniser in any of the manners described previously, and again can provide additional discrimination for the speech recogniser to improve its accuracy. Again to help with robustness, optionally the training set may include a proportion of erroneous phoneme or homophone selections, and may include training with and without such inputs.

It will be appreciated that any of the above three instances of boundary input can be used separately or in parallel, which is to say that in parallel two or more of the input methods are available at the same time, even if only one of them is used at any given moment.

Hence for example if all three were available in parallel, then if the user was able to input the relevant phoneme or a homophone of it at roughly the same time as starting the say the word, this could be input to the speech recogniser. However, if they could not easily find the relevant input in time, they might instead just select a vowel or consonant input, or just a 'word boundary' input as a fall-back.

In this case, the speech recogniser may be trained to receive any of the inputs, with a phoneme acting as both the phoneme/homophone per se, and also optionally as a vowel/consonant classification as appropriate, and also as a word boundary input per se. Then if only a vowel/consonant classification is provided, this also acts as a word boundary per se, whilst if only a word boundary is input, this only signifies that fact. Hence the three input respectively types act as enrichments or enhancements of the preceding instance and are also backwards-compatible for the purposes of input to the speech recogniser.

This allows a user to mix and match inputs during their utterances, where this is supported, according to how easily they can find the inputs while speaking. Some may prefer to speak slowly and provide more discriminatory input such as vowel / consonant or phoneme / homophone inputs, whilst others may prefer to speak more quickly and just indicate word boundaries, with perhaps occasionally more precise inputs when easy for them to do so.

The above mixed-mode input of speech and physical inputs suggests using phonemes / homophones as inputs, but it will be appreciated that it is not limited to this and may alternatively or in addition use letters of an alphabet in a similar manner, or indeed pictographic symbols, shorthand symbols, or other representations of letters, phonemes, partial or whole words, as the user's language(s) and background allow. In these cases the speech recogniser may be trained accordingly for 'localisation' to the relevant inputs.

The above approaches refer to using vowel / consonant or phoneme / homophone inputs only at the start of a word as an enhanced word boundary signifier. However, optionally a user can provide such inputs during the utterance of a word to guide recognition of other parts of the word as well.

Such additional inputs may be of help to distinguish words that sound the same, such as 'bare' and 'bear', or 'witch' and 'which', although typically grammar models can be used to disambiguate such terms since the placement of the word in a sentence is likely to discriminate an adjective, an interrogative, or a noun - which is why these similar sounding words can coexist in spoken language.

Hence in a final instance of the embodiments, for example a user may be a touch-typist with access to a full keyboard and a microphone. They can talk at the same time as they type, and the typed text and the spoken words can be used to cross-validate each other to produce accurate written text; hence the typed text can be used to guide recognition, whilst the recognised words can be used to correct spelling mistakes (either enhancing a conventional spell checker, preceding it, following it, or replacing it, as desired). In this case, optionally the confidence with which a spoken word is recognised can be used to determine if it is a good model for a spell check. Meanwhile even for words that sound similar, the spelling can guide which word is intended within the possible set of words, and any error can still be corrected.

In time, a user may learn to type partial words and speak more quickly. Hence for example the previous sentence may be typed as "in ti, a us ma le t typ par wo and spe mo qui" whilst also talking, to obtain the fully generated text.

Similarly with practice on a videogame controller, a user may migrate from just word boundaries to phoneme inputs (or text inputs) either just for the start of words or optionally for some or all of a word, as they gain familiarity with the input scheme.

### Variants

As described elsewhere herein, it has been proposed that physical inputs are transitory and indicate word boundaries, with greater or lesser additional discriminatory information. However, it is also possible for physical inputs to be longer and indicate word presence

Hence for example, in a first variant instance a user could drag their finger over touch pad 138 for the duration for the word; hence 'exercise' could translate to a finger drag '_', whilst 'extra fries' translates into two shorter finger drags '_ _'. Optionally each finger drag would end with a physical removal of the finger, or merely a pause of motion.

With this approach, where a word starts and/or stops and/or the duration of the word are signified for a suitably trained speech recogniser. A button press, joystick manipulation or trigger press could serve the same purpose as a finger or a stylus drag over a touch pad. It will be appreciated that such an approach still represents word boundaries through physical input, but this time by temporary cessation or pausing of input.

In a second variant instance, the user could attempt to write the word with their finger (or stylus) on the touch pad; in effect the finger drag now also contains some information about the letters, in a similar way to how the vowel/consonant or phoneme/homophone inputs described elsewhere enhanced the information provided by the word boundary inputs. A similar approach could invite the user to hold the top of a joystick like a pen, and 'write' with it to produce a similar trace.

Even if the input is a squiggle (or warped by the limited motion of a joystick), or only captures elements characteristic of the first and/or last letters, or certain key characteristics such as a tall vertical stroke for a letter 't' or 'l', these can still be useful to a suitably trained speech recogniser as complementary to spoken input data. In particular, the overall shape of a word, comprising short or tall letters, can itself provide discriminatory information about the spoken word even if the individually written letters are illegible (at least to the input system). For example, again 'exercise' and 'extra fries' can be distinguished by their relative shapes and/or by the presence of long letters 't' and 'f' only in the second alternative.

It will be appreciated that a combination of drag and button press inputs could also be used in either instance, for example with a mouse; a mouse button could be clicked to indicate the word boundary (the start or optionally end) and the mouse then moved during the speech, optionally to 'write' the word. Similarly a trackpad or joystick could be used in conjunction with a button or trigger.

Optionally, whether using a touch pad, joystick, or mouse, the user's tracked path could be shown on a graphical UI so that they could learn from the visual feedback and potentially improve the quality of their inputs over time. In the case of the joystick, a horizontal progression could be imposed on the inputs as they are displayed.

Hence more generally, a physical input is provided to a device, which correlates with an aspect of a corresponding spoken input in order to improve the recognition of that spoken input, to assist with speech recognition particularly in circumstances where it is not otherwise accurate enough to be useful.

Separately, as noted elsewhere herein, users may occasionally provide incorrect physical inputs, for example falling into a syllable-based rhythm that results in a mid-word break being erroneously indicated, or inputting an incorrect phoneme or classification if they feel rushed.

Accordingly, in a variant instance, the physical inputs are ignored unless the phoneme recognition by the speech recogniser, and/or overall word recognition, falls below a respective confidence score. Typically the speech recogniser will select a phoneme with the highest probability, but that probability may nevertheless be low. Meanwhile the sequence of phonemes contributing to a word may result in high confidence in the word (e.g. where the phoneme sequence is highly distinctive), or not.

Hence for a set of high-probability phonemes in a distinctive sequence, the confidence in the resulting complete word may be high and the additional, potentially erroneous, physical inputs may be ignored or a weighting may be applied to reduce their influence. Meanwhile for a word with an ambiguous sequence, or which relies on one phoneme to disambiguate the word, and that phoneme has a low probability in the speech recogniser, then the physical input may be of help, even if there is a risk of an error occurring in the physical input at the same time as low confidence in the speech - although even here there is no guarantee that any such input error correlates with the problem with the speech to make it worse.

The result overall is that when speech recognition is working with more than a threshold confidence, the physical input may be ignored or down-weighted, whilst if the threshold confidence is not met then the physical input is more likely than not to be of some help in improving the recognition quality. The weighting of the physical input may be made a function of the confidence in the speech recognition, either on an instantaneous basis or on a rolling basis (i.e. to identify when a user is difficult to understand for any of the reasons described previously, and weight the physical inputs accordingly).

In practice this may be achieved by running the recognition in parallel on speech recognisers trained with and without physical inputs; if the confidence of the speech recogniser that does not use the physical inputs is high then the output of the speech recogniser that does use the physical inputs is ignored. Alternatively if the outputs of both are different then the user may be offered the option to choose the correct word. Similarly optionally if a speech recogniser trained without physical inputs is initially used by default, but speech/word confidence is consistently low and/or the user indicates dissatisfaction with the outcome, then the system can switch to a speech recogniser trained with physical inputs, and explain the switch to the user.

### Summary

Referring again to Figures 1 and 4A and 4B, in a summary embodiment of the present description, an input system comprises the following:
A spoken input processor (for example CPU 20 and dataport 60, or a CPU in a handheld controller) configured (for example by suitable software instruction) to receive spoken inputs from a microphone (for example mounted on handheld controller 130, or on a headset or an HMD 120) operably coupled to the input system (e.g. by wired or wireless connection, for example by Bluetooth^{®}), as described elsewhere herein. The spoken inputs are typically signals representing speech, and optionally pre-processed in the time or frequency domain, as discussed elsewhere herein.

A physical input processor (for example CPU 20 and dataport 60, or a CPU in a handheld controller) configured (for example by suitable software instruction) to receive physical inputs (e.g. signals indicating physical inputs for example from one or more buttons, triggers, joysticks, trackpads ,or motion sensors) from a peripheral device (for example one or more handheld controllers, a mouse, or a keyboard) operably coupled to the input system (e.g. by wired or wireless connection, for example by Bluetooth^{®}), the physical inputs having a timing relative to the spoken inputs (e.g. being input substantially in parallel with the speech and with timings corresponding to it determined by a user of the peripheral device),as described elsewhere herein.

A speech recognition processor (for example CPU 20, and/or a CPU of a remote recognition server, not shown) configured (for example by suitable software instruction) to recognise speech from the speech inputs (e.g. phonemes or letters, and optionally thereafter complete words, either as part of the same speech recognition process or a subsequent word recognition process), as described elsewhere herein.

The speech recognition processor uses at least some of the received physical inputs, and their timing relative to the spoken inputs, as part of the speech recognition process, as described elsewhere herein. Hence for example the timing of the physical inputs may be used to indicate a word boundary, and/or the approximate or unique nature of a correspondingly timed speech element within a word - subject to any predictable timing offsets within the process.

Instances of this summary embodiment implementing the methods and techniques described herein (for example by use of suitable software instruction) are envisaged within the scope of the application, including but not limited to that:
- at least a subset of the physical inputs indicate word boundaries in the spoken inputs, as described elsewhere herein;
- at least a subset of the physical inputs indicate a classification (e.g. as vowel/consonant) of at least a first part of a respective word in the spoken inputs, as described elsewhere herein;
- at least a subset of the physical inputs indicate one selected from the list consisting of a unique characteristic (e.g. a phoneme or letter) of at least a first part of a respective word in the spoken inputs; and a characteristic of at least a first part of a respective word in the spoken inputs similar to a unique characteristic not available for indication by a current physical input (e.g. a homophone), as described elsewhere herein;
- at least a subset of the physical inputs indicate one selected from the list consisting of a unique characteristic of at least a part of a respective word in the spoken inputs corresponding to a timing of the physical input (e.g. a phoneme or letter at any point in the word, e.g. when typed on a keyboard); and a characteristic of at least a part of a respective word in the spoken inputs corresponding to a timing of the physical input, similar to a unique characteristic not available for indication by a current physical input (e.g. a homophone or similar sounding letter input from a reduced set of options, such as a controller using the phoneme input techniques described previously) , as described elsewhere herein;
- in the above instances, the unique characteristic is one or more selected from the list consisting of a phoneme; a letter of an alphabet; and a specific word or part-word representation (e.g. shorthand), as described elsewhere herein;
- the physical inputs are from one or more selected from the list consisting of a button; a trigger; a joystick; a touch tracker; and a motion tracker (e.g. in a mouse) of the peripheral device, as described elsewhere herein;
- the speech recognition processor comprises a machine learning model trained to use as inputs both speech inputs and physical inputs, and to provide as outputs data identifying the speech inputs, as described elsewhere herein;
- in this instance, optionally the machine learning model was trained using speech inputs, but a predetermined proportion of the corresponding physical inputs were one or more selected from the list consisting of erroneously omitted; erroneously timed; and erroneously added, as described elsewhere herein;
- the speech recognition processor produces a confidence score in association with the recognised speech; and if the confidence score is above a predetermined threshold, the physical inputs are discounted, as described elsewhere herein; and
- the input system is part of an entertainment device 10, as described elsewhere herein.

It will be appreciated that the above apparatus may be hardware suitably adapted as applicable by software instruction or by the inclusion or substitution of dedicated hardware to implement the methods described herein.

Thus the required adaptation to existing parts of an equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

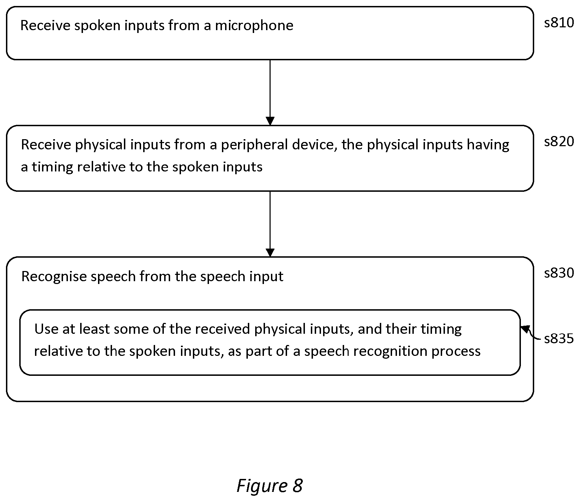

Turning now to Figure 8, in a summary embodiment of the present description, an input method comprises the following steps.
- In a first step s810, receiving spoken inputs from a microphone, as described elsewhere herein.
- In a second step s820, receiving physical inputs (i.e. signals indicating the physical inputs) from a peripheral device, the physical inputs having a timing relative to the spoken inputs, as described elsewhere herein.
- In a third step s830, recognising speech from the speech input, as described elsewhere herein.
- And finally in a substep s835, the recognising step uses at least some of the received physical inputs, and their timing relative to the spoken inputs, as part of a speech recognition process, as described elsewhere herein.

It will be apparent to a person skilled in the art that variations in the above method corresponding to operation of the various embodiments of the apparatus as described and claimed herein are considered within the scope of the present invention, including but not limited to that:
- at least a subset of the physical inputs indicate one or more selected from the list consisting of word boundaries in the spoken inputs; a classification of at least a first part of a respective word in the spoken inputs; a unique characteristic of at least a first part of a respective word in the spoken inputs; and a characteristic of at least a first part of a respective word in the spoken inputs similar to a unique characteristic not available for indication by a current physical input, as described elsewhere herein; and
- at least a subset of the physical inputs indicate one selected from the list consisting of a unique characteristic of at least a part of a respective word in the spoken inputs corresponding to a timing of the physical input; and a characteristic of at least a part of a respective word in the spoken inputs corresponding to a timing of the physical input, similar to a unique characteristic not available for indication by a current physical input, as described elsewhere herein.

As noted previously herein, the above apparatus and techniques are not limited to the context of games and games consoles, but may also be relevant to any use of speech-to-text recognition, for example to dictate diary entries, speak search queries, and the like. Hence the input system and method may be of use on a mobile phone, laptop, smart TV (e.g. where the remote control acts as the controller), personal digital assistant, or other device where spoken input may be a chosen mode of interaction with the device.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. An input system, comprising:
a spoken input processor configured to receive spoken inputs from a microphone operably coupled to the input system;
a physical input processor configured to receive physical inputs from a peripheral device operably coupled to the input system, the physical inputs having a timing relative to the spoken inputs; and
a speech recognition processor configured to recognise speech from the speech inputs; wherein
the speech recognition processor uses at least some of the received physical inputs, and their timing relative to the spoken inputs, as part of the speech recognition process.

2. An input system according to claim 1, in which
at least a subset of the physical inputs indicate word boundaries in the spoken inputs.

3. An input system according to claim 1 or claim 2, in which
at least a subset of the physical inputs indicate a classification of at least a first part of a respective word in the spoken inputs.

4. An input system according to any preceding claim, in which
at least a subset of the physical inputs indicate one selected from the list consisting of:
i. a unique characteristic of at least a first part of a respective word in the spoken inputs; and
ii. a characteristic of at least a first part of a respective word in the spoken inputs similar to a unique characteristic not available for indication by a current physical input.

5. An input system according to any preceding claim, in which
at least a subset of the physical inputs indicate one selected from the list consisting of:
i. a unique characteristic of at least a part of a respective word in the spoken inputs corresponding to a timing of the physical input; and
ii. a characteristic of at least a part of a respective word in the spoken inputs corresponding to a timing of the physical input, similar to a unique characteristic not available for indication by a current physical input.

6. An input system according to claim 4 or claim 5, in which
the unique characteristic is one or more selected from the list consisting of:
i. a phoneme;
ii. a letter of an alphabet; and
iii. a specific word or part-word representation.

7. An input system according to any preceding claim, in which
the physical inputs are from one or more selected from the list consisting of:
i. a button;
ii. a trigger;
iii. a joystick;
iv. a touch tracker; and
v. a motion tracker
of the peripheral device.

8. An input system according to any preceding claim, in which
the speech recognition processor comprises a machine learning model trained to use as inputs both speech inputs and physical inputs, and to provide as outputs data identifying the speech inputs.

9. An input system according to claim 8, in which
the machine learning model was trained using speech inputs, but a predetermined proportion of the corresponding physical inputs were one or more selected from the list consisting of:
i. erroneously omitted;
ii. erroneously timed; and
iii. erroneously added.

10. An input system according to any preceding claim, in which
the speech recognition processor produces a confidence score in association with the recognised speech; and
if the confidence score is above a predetermined threshold, the physical inputs are discounted.

11. An entertainment system comprising the input system of any preceding claim.

12. An input method, comprising:
receiving spoken inputs from a microphone;
receiving physical inputs from a peripheral device, the physical inputs having a timing relative to the spoken inputs; and
recognising speech from the speech inputs; wherein
recognising step uses at least some of the received physical inputs, and their timing relative to the spoken inputs, as part of a speech recognition process.

13. The input method of claim 12, in which:
at least a subset of the physical inputs indicate one or more selected from the list consisting of:
i. word boundaries in the spoken inputs;
ii. a classification of at least a first part of a respective word in the spoken inputs;
iii. a unique characteristic of at least a first part of a respective word in the spoken inputs; and
iv. a characteristic of at least a first part of a respective word in the spoken inputs similar to a unique characteristic not available for indication by a current physical input.

14. An input method according to any one of claims 12 and 13, in which
at least a subset of the physical inputs indicate one selected from the list consisting of:
i. a unique characteristic of at least a part of a respective word in the spoken inputs corresponding to a timing of the physical input; and
ii. a characteristic of at least a part of a respective word in the spoken inputs corresponding to a timing of the physical input, similar to a unique characteristic not available for indication by a current physical input.

15. A computer program comprising computer executable instructions adapted to cause a computer system to perform the method of any one of claims 12 to 14.
